# EUROPÄISCHE PATENTSCHRIFT

(11) **EP 3 926 318 B1**
(45) Veröffentlichungstag und Bekanntmachung des Hinweises auf die Patenterteilung: **29.03.2023**
(21) Anmeldenummer: 20180754.2
(22) Anmeldetag: 18.06.2020
(51) Int. Cl.: G01M 1/30, G01B 11/30, G06T 7/586, G01M 17/02, G01B 11/24, G01B 11/26, G06T 7/73, G01M 17/013

(54) **VERFAHREN UND VORRICHTUNG ZUR DREHWINKELGENAUEN AUSRICHTUNG EINES REIFENS AUF EINER FELGE**
METHOD AND DEVICE FOR ADJUSTING A TYRE ON A RIM TO A PRECISE ANGLE
PROCÉDÉ ET DISPOSITIF D'ALIGNEMENT DE MANIÈRE PRÉCISE AU NIVEAU DE L'ANGLE DE ROTATION D'UN PNEU SUR UNE JANTE

(43) Veröffentlichungstag der Anmeldung: 22.12.2021
(73) Patentinhaber: Hofmann Maschinen- und Anlagenbau GmbH, 67550 Worms (DE)
(72) Erfinder: Knorps, Sarah, 64293 Darmstadt (DE); Nolandt, Andreas, 67549 Worms (DE); Aumann, Stephan, 67551 Worms (DE)
(74) Vertreter: Tergau & Walkenhorst Patentanwälte PartGmbB

(56) Entgegenhaltungen:
- EP-A2- 1 738 937
- EP-A2- 1 746 401
- EP-B1- 1 738 937
- DE-A1-102017 213 761
- DE-C1- 19 725 633

## Beschreibung

Die Erfindung betrifft ein Verfahren und eine Vorrichtung zur drehwinkelgenauen Ausrichtung eines Reifens auf einer Felge in einem vormontierten Komplettrad, wobei anhand eines von einer Kamera aufgenommen Bildes die Ist-Winkellage eines Matchpunktes des Reifens und/oder eines Matchpunktes der Felge relativ zu einer jeweiligen Referenzausrichtung und/oder relativ zueinander erfasst wird und eine Soll-Winkellage durch Drehen des Reifens und/oder der Felge hergestellt wird.

Ein derartiges Verfahren ist aus der EP 1 564 028 B1 bekannt. Die Bildauswertung ist dort nicht näher spezifiziert. Weitere Verfahren zur drehwinkelgenauen Ausrichtung eines Rades auf einer Felge nach dem Oberbegriff von Anspruch 1 sind den Dokumenten EP1738937A2 und EP1746401A2 zu entnehmen.

Matchen ist ein Verfahren bei der Reifenmontage, das zum optimalen Rundlauf des Komplettrades bestehend aus Felge, Reifen und Ventil beiträgt. Dabei werden die Rundlaufabweichungen von Felge und Reifen so miteinander kombiniert, dass sie sich gegenseitig weitgehend neutralisieren. Beispielsweise kann vorgesehen sein, den geometrischen Tiefpunkt der Felge dem Krafthochpunkt des Reifens zuzuordnen. Die Reifen werden vom Hersteller vermessen und mit einem Matchpunkt an der Reifenflanke gekennzeichnet. Analog wird mit der Felge verfahren. Diese beiden Matchpunkte werden in einer Matchmaschine durch Drehen des Reifens und/oder der Felge übereinander oder in eine andere vorgegebene Winkelstellung zueinander gebracht.

Bei der Felge ist es üblich, die Winkellage eines Matchpunktes auf ein Ventil zu beziehen. Das Ventil kann damit selbst als Matchpunkt betrachtet werden. Daher ist eine automatisierte Erkennung des Ventils oder ähnlichen Strukturmerkmals an der Felge oder beim Reifen bei der Bildauswertung wünschenswert.

Aufgabe der Erfindung ist es daher, das aus dem Stand der Technik bekannte Verfahren um eine zuverlässige, praxistaugliche und schnelle Bildauswertung zu erweitern, die in computerimplementierter Form eine automatisierte Erkennung und Lageermittlung von Strukturmerkmalen der Felge und/oder des Reifens, insbesondere eines Ventils an der Felge, ermöglicht.

Die Aufgabe wird erfindungsgemäß gelöst durch ein Verfahren mit den Merkmalen des Anspruchs 1 und eine zugehörige Vorrichtung gemäß Anspruch 12.

Demnach umfasst die Erfassung der Ist-Winkellage folgende Schritte:
- Aufnahme von mindestens drei, vorzugsweise vier Einzelbildern des Komplettrades durch die Kamera mit jeweils unterschiedlichen (unabhängigen) Beleuchtungsrichtungen;
- Erstellung eines Informationen zur (insbesondere dreidimensionalen) Oberflächenstruktur des Komplettrades enthaltenden Ausgabebildes durch Fusion aus den Einzelbildern;
- softwarebasierte (algorithmische) Objektsuche im Ausgabebild nach einem vorgegebenen Strukturmerkmal des Reifens und/oder der Felge und Ermittlung der Objektlage.

Die Vorrichtung zur Durchführung des Verfahrens umfasst eine Auflage zur Aufnahme des Komplettrades, und ist ausgestattet mit einer auf die Auflage gerichteten Kamera, mit mindestens drei, vorzugsweise vier Lichtquellen zur Beleuchtung des auf der Auflage liegenden Komplettrades aus jeweils unterschiedlichen Beleuchtungsrichtungen, mit einer Steuerung für die koordinierte Ansteuerung von Kamera und Lichtquellen, und mit einer Auswertungseinheit für die Erstellung des Ausgabebildes und die Objektsuche sowie Lageermittlung.

Überraschenderweise wurde festgestellt, dass das an sich unter der Bezeichnung photometrische Stereomessung bekannte Verfahren, bei dem eine Rekonstruktion von dreidimensionalen Oberflächeneigenschaften des unter verschiedenen Beleuchtungsrichtungen aufgenommenen Objekts erfolgt, im vorliegenden Zusammenhang bei der Erkennung von Matchpunkten während der Radmontage auf einfache Weise deutliche zuverlässigere Resultate liefert als eine Bildauswertung des ursprünglichen Kamerabildes. Insbesondere ist es damit möglich, flexibel unterschiedliche Typen und/oder Größen von Reifen und/oder Felgen zu verarbeiten, ohne den zugrunde liegenden Algorithmus durch Referenzbilder anlernen zu müssen.

Vorteilhafte Ausgestaltungen des Verfahrens gehen aus den abhängigen Ansprüchen in Verbindung mit der Figurenbeschreibung hervor.

Ein Ausführungsbeispiel der Erfindung wird nachfolgend anhand der beiliegenden Zeichnungen näher erläutert. Es zeigt in jeweils vereinfachter schematischer Darstellung:
- FIG. 1: eine perspektivische Ansicht einer Matchmaschine zur drehwinkelgenauen Ausrichtung (Matching) eines Reifens auf einer Felge,
- FIG. 2: ein in die Matchmaschine gemäß FIG. 1 integriertes Kamera- und Beleuchtungssystem in seitlicher Ansicht,
- FIG. 3 bis 9: verschiedene mit dem Kamera- und Beleuchtungssystem gemäß FIG. 2 aufgenommene Bilder in verschiedenen Stadien der Bearbeitung während eines Matchvorganges.

Der Begriff Felge wird hier im umgangssprachlichen Sinne verwendet und bezeichnet das Rad eines Fahrzeuges ohne den Reifen. Die Einheit aus Felge und Reifen wird auch als Komplettrad oder kurz Rad bezeichnet.

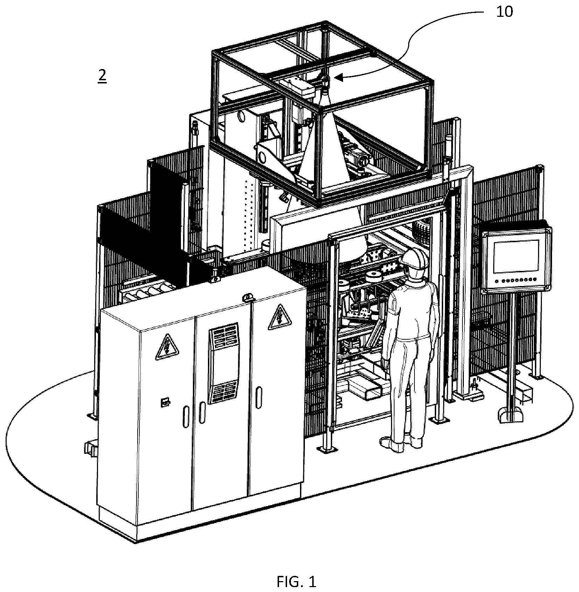

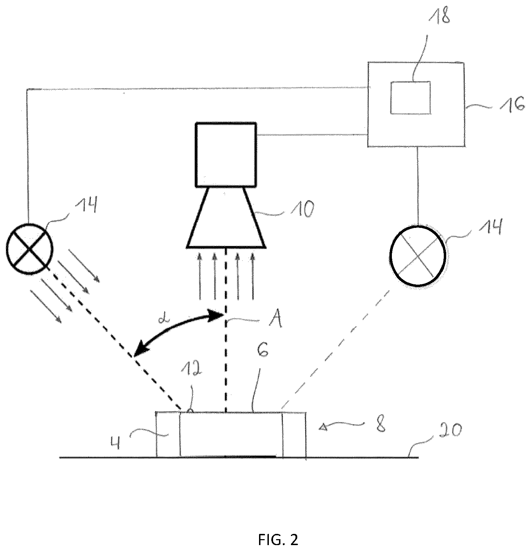

Die in FIG. 1 schematisch dargestellte Vorrichtung, eine sogenannte Matchmaschine 2, dient zur drehwinkelgenauen Ausrichtung (Matching) eines Reifens 4 auf einer Felge 6 (siehe auch FIG. 2). Dabei wird ein am Umfang des Reifens 4 vorgegebener Referenz- oder Matchpunkt (Markierung) in eine definierte Winkellage relativ zu einem am Umfang der Felge 6 vorgegebenen Referenz- oder Matchpunkt gebracht, indem der auf der Felge 6 vormontierte Reifen 4 relativ zur Felge 6 gedreht wird. Beispielsweise wird dazu der durch ein geeignetes Greifwerkzeug in der Matchmaschine 2 in seiner Drehstellung fixierte Reifen 4 durch ein Stauch- oder Spannwerkzeug im Bereich der Reifenflanke axial zusammengedrückt, so dass sich der feste Sitz auf der Felge 6 löst, und die Felge 6 wird mit Hilfe eines Drehwerkzeuges in die gewünschte Drehstellung gedreht. Anschließend wird die Stauchung beendet, und der Reifen 4 nimmt infolge seiner Elastizität wieder seinen festen Sitz auf der Felge 6 ein - nun in der gewünschten Winkellage.

Die zum Einfördern, Zentrieren, Festhalten, Drehen und Ausfördern der Räder oder Ihrer Bestandteile in die Matchmaschine 2 erforderlichen mechanischen Komponenten können beispielweise wie in EP 1 564 028 B1 beschrieben oder davon abweichend realisiert sein. Darauf kommt es vorliegend nicht im Detail an. Insbesondere kann die Matchmaschine 2 auch zur Vormontage des Komplettrades 8, also zum Aufspannen des Reifens 4 auf die Felge 6 vor dem Matchvorgang ausgelegt sein.

Zur Bestimmung des erforderlichen Drehwinkels muss zunächst der Istzustand, also die aktuelle Winkellage der Matchpunkte von Reifen 4 und Felge 6 in Bezug auf ein raumfestes Referenzkoordinatensystem oder eine Referenzausrichtung, erfasst werden. Dazu ist vorliegend eine automatisierte, rechnergestützte Bildauswertung von Kamerabildern vorgesehen, welche durch eine Kamera 10 in Draufsicht auf das Komplettrad 8 aufgenommen werden.

Konkret liegt das vormontierte Komplettrad 8 während des Matchvorganges derart horizontal auf einer beispielsweise durch Schienen verwirklichten Spannauflage oder Auflage 20 der Matchmaschine 2, dass seine Radachse A vertikal ausgerichtet ist. Die an einem Rahmen oder Gehäuseteil der Matchmaschine 2 monierte Kamera 10 blickt von oben auf das Komplettrad 8, wobei die optische Achse der Kamera 10 vorzugsweise mit der Radachse A zusammenfällt (zentrische Anordnung). Das heißt, die Kamera 10 ist im Wesentlichen rechtwinklig zu der aufzunehmenden Szenerie ausgerichtet. Das in FIG. 1 durch einen Kreiskegel veranschaulichte Blickfeld der Kamera 10 deckt vorzugsweise das gesamte Komplettrad 8 bis zum Außenumfang des Reifens 4 ab.

Der Matchpunkt des Reifens 4 kann beispielsweise durch einen Farbpunkt auf der üblicherweise dunklen Reifenoberfläche markiert sein und ist in der Regel gut durch automatische Bildauswertung zu erkennen. Der Matchpunkt der Felge 6 hingegen ist durch ein Strukturmerkmal der Felge 6 verwirklicht, nämlich ein Ventil 12 oder ein Ventilloch, welches schwieriger zu ermitteln ist. Dies gilt insbesondere, wenn nicht nur ein einziger, sondern mehrere Räder- oder Felgentypen in der Matchmaschine 2 behandelt werden.

Auch wenn konzeptionell ein anderer Matchpunkt an der Felge 6 vorgesehen sein sollte, so kann durch dessen bekannte Winkellage relativ zum Ventil 12 mit einer einfachen Umrechnung das Ventil 12 als Matchpunkt verwendet werden.

Für die Bildauswertung werden mindestens drei, vorzugsweise vier Aufnahmen (Bilder) des Komplettrades 8 mit der Kamera 10 gemacht, wobei die Anordnung und Ausrichtung der Kamera 10 relativ zum Komplettrad 8 wie oben beschrieben gleichbleiben, jedoch die Ausleuchtung variiert wird. Dies ist in der schematischen Seitenansicht gemäß FIG. 2 veranschaulicht. Dort sind beispielhaft zwei Lichtquellen 14 dargestellt, die im eingeschalteten Zustand das Komplettrad 8 jeweils schräg von oben beleuchten, und zwar in einem bestimmten Neigungswinkel α zur optischen Achse. Tatsächlich sind mindestens drei, vorzugsweise vier Lichtquellen 14, um die Kamera 10 herum verteilt, und zwar vorzugsweise umfänglich gleich verteilt auf einer gedachten horizontalen Kreislinie um die optische Ache herum. Das heißt, bei drei Lichtquellen 14 sind die zugehörigen Hauptbeleuchtungsrichtungen in der Draufsicht oder Projektion von oben vorzugsweise um jeweils 120° gegeneinander versetzt bzw. verdreht, und bei vier Lichtquellen um vorzugsweise 90°. Die bevorzugt gleichartigen Lichtquellen 14 sind vorzugsweise jeweils auf das Zentrum des Komplettrades 8 ausgerichtet, und besitzen zu diesem Zentrum vorzugsweise den gleichen Abstand. Der Neigungswinkel α gegenüber der optischen Achse ist bevorzugt für alle Lichtquellen 14 gleich.

Bevorzugt handelt es sich bei den Lichtquellen 14 um Strahler, insbesondere Blitzlichtstrahler, die möglichst parallele und gleichförmige Lichtstrahlen produzieren (telezentrische Lichtquellen). Gegebenenfalls weisen sie zu diesem Zweck geeignete Linsen auf. Jede der Lichtquellen 14 sollte in der Lage sein, das Rad über die gesamte von oben sichtbare Fläche möglichst homogen auszuleuchten, um lokale Über- oder Unterbelichtungen zu vermeiden. Zur Abdunklung von Umgebungslicht können um das Rad herum geeigneten Einhausungen oder dergleichen an der Matchmaschine 2 angebracht sein.

Für einen einfachen und robusten mechanischen Aufbau sind die Lichtquellen 14 vorzugsweise fest an einem Rahmen- oder Gehäuseteil der Matchmaschine 2 angeordnet und ausgerichtet. Der Neigungs- oder Einstrahlwinkel α ist daher normalerweise im Betrieb fest eingestellt, kann aber optional veränderbar sein.

Für die Erstellung der Aufnahmen werden die Lichtquellen 14 nach Art einer Blitzlichtkaskade nacheinander kurz an- und dann wieder ausgeschaltet, wobei während der jeweiligen Einschaltzeit ein zugehöriges Bild mit der Kamera 14 aufgenommen wird. Zur Anpassung an unterschiedlichen Rad- bzw. Felgentypen sind in einer zugehörigen Steuerung 16 vorzugsweise ein oder mehrere der folgenden Parameter einstellbar: Beleuchtungsdauer (Blitzdauer), Beleuchtungsintensität, Belichtungszeit der Kamera, Blendenöffnung oder Sensitivität der Kamera. Dadurch kann die Steuerung 16 flexibel auf beispielsweise unterschiedliche Felgendesigns (Farbgebung, Reflexion etc.) reagieren und geeignete Einstellungen vornehmen.

In einer denkbaren Alternative ist nur eine Lichtquelle 14 vorhanden, die beispielsweise mittels eines Verstellantriebs entlang von Schienen in festgelegte Beleuchtungspositionen gefahren werden kann.

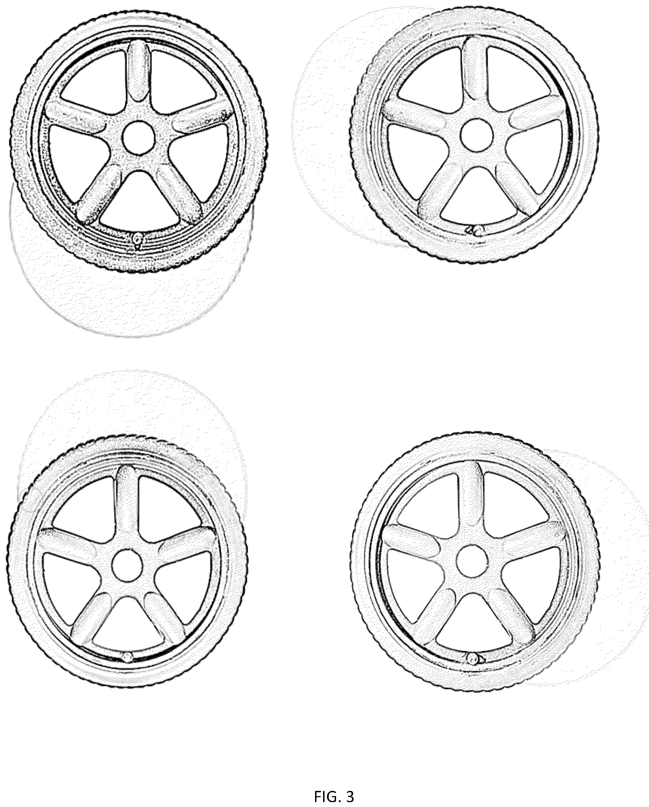

Das Ergebnis der Operation ist in FIG. 3 beispielhaft anhand von vier Bildern des Komplettrades 8 mit insgesamt vier unabhängigen Beleuchtungsrichtungen dargestellt.

Die mit der Kamera 10 bei jeweils unterschiedlicher Beleuchtung aufgenommenen Bilder des Komplettrades 8 werden nun in einem zugehörigen Rechner mit Hilfe einer Bildauswertungssoftware nach Art einer photometrischen Stereomessung fusioniert oder überlagert und ausgewertet.

Die photometrische Stereomessung ermöglicht die Rekonstruktion der Oberfläche eines dreidimensionalen Objekts anhand der aufgenommenen zweidimensionalen Bilder.

Die beispielsweise auf dem Algorithmus von Woodham basierende Auswertung benötigt mindestens drei Bilder des gleichen Objekts, aufgenommen mit unterschiedlichen bekannten Beleuchtungsrichtungen. Die Ausrichtung der Kamera zum Objekt muss für alle Bilder gleich sein.

Die dreidimensionale Form des Objekts wird dabei in erster Linie in Form von lokalen Gradienten der dreidimensionalen Oberfläche berechnet. Diese Gradienten können weiter integriert werden, so dass ein Höhenmodell entsteht, das heißt ein Bild, in dem jeder Pixelwert einer relativen Höhe entspricht. Die zweidimensionale Textur wird als Albedo bezeichnet und entspricht der lokalen Lichtabsorption und Reflektionscharakteristik der Oberfläche ohne Einfluss von Schatten.

Die Auswertungssoftware gibt vorteilhafterweise zumindest eines der folgenden Bilder aus:
- Ein Gradientenbild, in dem die Pixelwerte dem Wert eines (ggf. normalisierten) Oberflächengradienten des aufgenommenen Objekts entsprechen.
- Ein Höhenbild, in dem die Pixelwerte einer relativen Höhe des aufgenommenen Objekts entsprechen.
- Ein Albedobild, in dem die Pixelwerte die Relation des reflektierten Lichts zum einfallenden Licht beschreiben. Weißen Oberflächen wird beispielsweiße der Wert eins zugeordnet, schwarzen Oberflächen der Wert null.

Als besonders bevorzugt für die nachfolgenden Auswertungsschritte hat sich das Gradientenbild herausgestellt. Prinzipiell sind sie aber auch bei den beiden anderen Typen von Ausgabebildern möglich.

Wie bereits erwähnt, benötigt das photometrische Stereoverfahren mindestens drei Bilder mit verschiedenen Beleuchtungsrichtungen. Für robustere Ergebnisse ist Redundanz vorteilhaft. Deshalb sollten normalerweise mehr als drei Lichtquellen 14 mit unterschiedlichen Beleuchtungsrichtungen gewählt werden. Eine steigende Anzahl von Beleuchtungsrichtungen führt aber auch zu einer höheren Anzahl von zu verarbeitenden Bildern und somit zu einer höheren Verarbeitungszeit. Im vorliegenden Anwendungsfall hat sich die Anzahl vier als sinnvoller Kompromiss erwiesen. Mehr als vier Lichtquellen 14 und eine entsprechende Anzahl von Aufnahmen sind jedoch prinzipiell möglich.

Das als Grundlage für die nachfolgende automatisierte Objekt- oder Struktursuche dienende Ausgabebild der photometrischen Stereoauswertung ist bevorzugt ein monochromes Bild, insbesondere ein Graustufenbild. Dadurch wird nämlich die Suche vereinfacht. Andernfalls müsste man in einem Farbbild die nachfolgend beschriebenen Operationen für jeden Farbkanal durchführen, was entsprechend aufwendiger wäre. Prinzipiell ist aber auch das möglich.

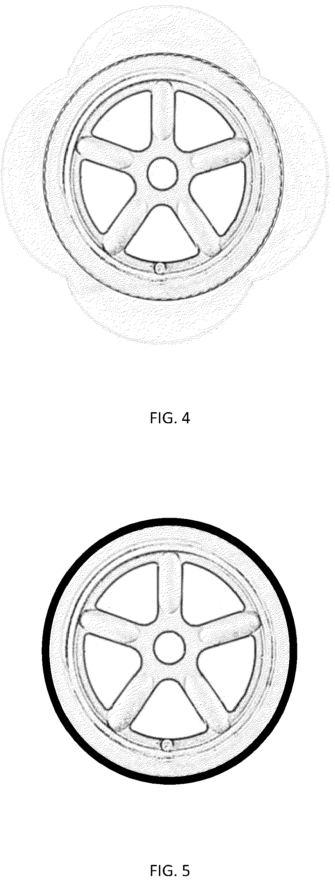

FIG. 4 zeigt beispielhaft ein aus der Überlagerung der vier Einzelbilder gemäß FIG. 3 erzeugtes Überlagerungsbild, wobei durch die oben beschriebene photometrische Auswertung aus den vier Einzelbildern ein Gradientenbild, hier als Grauwertbild, erzeugt wird.

In einem optionalen Zwischenschritt kann durch einen Mustererkennungsalgorithmus anhand des Überlagerungsbildes oder des Gradientenbildes eine Identifikation des kreisförmigen Außenumfangs des Reifens 4 und damit einhergehend eine Bestimmung des Rad- bzw. Reifenaußendurchmessers erfolgen. Dies ist in FIG. 5 veranschaulicht.

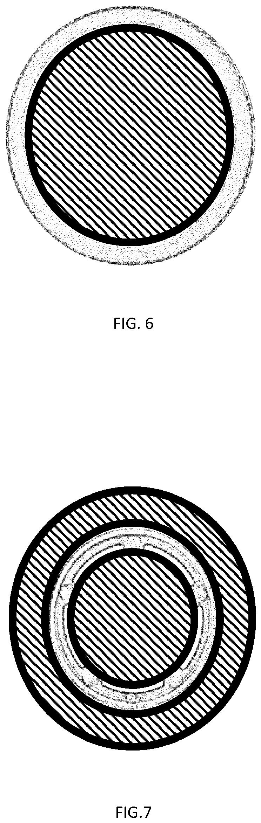

In analoger Weise kann in einem optionalen Zwischenschritt eine Identifikation des Felgenumfangs und eine Bestimmung des Felgendurchmessers (gemeint ist hier der Außendurchmesser) erfolgen. Dies ist in FIG. 6 veranschaulicht.

Anhand der in diesen beiden Schritten gewonnenen Daten kann beispielsweise der Reifen- und/oder Felgentyp bestimmt und/oder überprüft werden.

Für das automatisierte Suchen des als Matchpunkt dienenden Ventils 12 oder Ventillochs an der Felge 6 ist es vorteilhaft, den Suchbereich im Gradientenbild auf den relevanten Kreisringbereich im Bereich des äußeren Felgenrings (der üblicherweise durch die Radscheibe oder den Radkranz mit dem Radflansch verbunden ist) einzuschränken. Dies kann in einer simplen Variante des Verfahrens durch die manuelle Eingabe der entsprechenden Radien oder Durchmesser erfolgen, oder durch Auslesen der Werte aus einer Datenbank mit Radtypdaten anhand des aktuellen Radtyps. Insbesondere kann der Radtyp dabei automatisiert anhand der vorherigen Zwischenschritte identifiziert werden. In einer bevorzugten Variante des Verfahrens erfolgt die Identifikation der relevanten Kreisringfläche jedoch vollautomatisch bildbasiert durch softwaregestützte Mustererkennung im Gradientenbild, ähnlich wie die spätere Ventilsuche. Gewissermaßen ist die Festlegung des Suchbereichs eine vorteilhafte Vorstufe zur weiter unten beschriebenen Ventilsuche innerhalb des Suchbereichs.

Der auf diese Weise festgelegte oder erfasste kreisringförmige Suchbereich ist beispielhaft in FIG. 7 veranschaulicht.

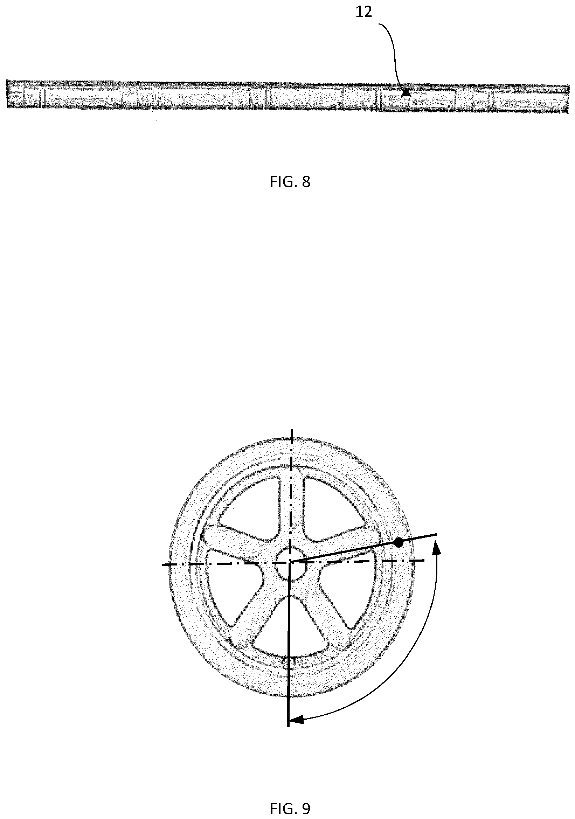

Im derart eingeschränkten Suchbereich erfolgt nun die eigentliche softwarebasierte Suche des Ventils 12 oder Ventillochs. Die Kreisringfläche wird dazu vorteilhafterweise durch die Auswertungssoftware abgewickelt und in eine zugehörige Rechteckfläche transformiert. Der abgewickelte Suchbereich ist in FIG. 8 veranschaulicht.

Der Hintergrund für diese Maßnahmen ist die anschließende Identifikation von und Unterscheidung zwischen relevanten und nicht relevanten Objekten oder Bereichen. Wenn man sich beispielsweise radial verlaufende Speichen und deren Schattierung in den ursprünglichen, noch nicht abgewickelten Bildern anschaut, so verlaufen diese immer in unterschiedliche Richtungen. Das macht es schwer, diese linienförmigen Objekte zu identifizieren. Deshalb bedient man sich vorteilhafterweise der Abwicklung, die kreisförmige Gebilde im Wesentlichen in horizontale Linien und radiale Gebilde in senkrechte Linien transformiert. Diese hauptsächlich im derart transformierten Ausgabebild des photometrischen Stereoverfahrens vorkommenden Objekte, also senkrechte und horizontale Linien, können viel einfacher durch Objekterkennungsalgorithmen gefunden werden und als nicht relevant verworfen werden.

Allgemein und etwas vereinfacht gesprochen basiert das Finden des Ventils 12 nicht darauf, das Ventil 12 gezielt zu suchen. Es wird vielmehr bevorzugt konzeptionell entgegengesetzt vorgegangen und durch den Algorithmus nach Bereichen gesucht, die definitiv nicht das Ventil 12 sein können. Diese Bereiche werden ausgeschlossen oder verworfen, und was am Ende übrigbleibt, ist das Ventil 12.

Gemäß diesem Ausschlussprinzip werden die in der Abwicklung gefundenen horizontalen und vertikalen Linienobjekte aus dem Suchbereich ausgeschlossen. Anschließend werden zusammenhängende Flächen des gleichen Grauwertbereiches identifiziert. Der Grauwertbereich ist fest vorgegeben und empirisch bestimmt. Alle Flächen mit einer Größe oberhalb einer vorgegebenen oberen Grenzgröße werden als zu groß ausgeschlossen, alle zu kleinen Flächen unterhalb einer unteren Grenzgröße werden ebenfalls ausgeschlossen. Im Anschluss werden die übrigen Objekte nach Form klassifiziert. Das heißt, eine Fläche eines Grauwertbereiches, die durch die obigen Filter nicht eliminiert wurde, wird nun auf Form geprüft. Da ein kreisförmiges Ventil 12 oder Ventilloch gesucht sind, werden durch den Algorithmus alle länglichen, nicht kreisförmigen Objekte ausgeschlossen. Störende Prägungen und dergleichen können auf diese Weise ebenfalls erkannt und verworfen werden. Übrig bleibt letztlich nur noch ein Bereich, das Ventil 12.

Am Ende des Erkennungsverfahrens wird die Kreisringfläche bildlich gesprochen wieder aufgewickelt und die Winkellage des Ventils 12 gegenüber einer vorab festgelegten Referenzausrichtung berechnet. Es erfolgt also eine Rücktransformation der anhand der Abwicklung ermittelten Ventilkoordinaten ins ursprüngliche Koordinatensystem und die Errechnung des Winkels. Dies ist in FIG. 9 veranschaulicht.

Nachdem die aktuelle Ist-Winkellage von Felge 4 und Reifen 6 auf der Auflage 20 der Matchmaschine 2 bekannt ist, wird der zur Erreichung der Soll-Winkellage erforderliche Drehwinkel berechnet und wie eingangs geschildert beispielweise durch Verdrehen der Felge 6 gegenüber dem fixierten Reifen 4 erreicht.

Der beschriebene Algorithmus kann im Prinzip bei jeglichem Typ und jeglicher Größe von Felge 6 angewendet werden. Ein Anlernen oder "Teachen" des Algorithmus, etwa durch Referenzbilder und/oder erstmalige manuelle Identifikation des Ventils 12, wie sie bei bestimmten Arten von auf künstlicher Intelligenz basierenden Methoden der Objekterkennung erforderlich ist, ist vorliegend nicht notwendig.

Alle beschriebenen Verfahrensschritte der Bildauswertung, Objekterkennung und Winkelberechnung können durch entsprechende Software 18 in einem handelsüblichen oder spezialisierten Computer implementiert werden. An diesen Computer ist über geeignete Schnittstellen auch die Kamera 10 angeschlossen und liefert die der Auswertung zugrunde liegenden Bilder. Weiterhin werden die Lichtquellen 14 über den Computer oder die Kamera 10 direkt angesteuert, und zwar vorzugsweise in einer auf die Funktion der Kamera 10 abgestimmten Weise, so dass die Lichtblitze mit den Kameraaufnahmen synchronisiert sind. Dies ist in FIG. 2 auf schematische Weise angedeutet. Die Software 18 ist zweckmäßigerweise modular aufgebaut und in die allgemeine Anlagensteuerung bzw. Steuerung 16 der Matchmaschine 2 integriert, so dass die dem Matching zugrunde liegenden Auswertungen auf den mechanischen Ablauf abgestimmt sind und sich nahtlos ohne wesentliche Verzögerung einfügen. Die Bildauswertung kann alternativ auch in einem separaten Rechner laufen. Die elektronische Kamera 10, vorzugsweise eine Digitalkamera mit Bildsensor, etwa auf CCD- oder CMOS-Basis, kann eine reine Standbildkamera oder eine Videokamera mit Standbildfunktion sein, die vorteilhafterweise in Kombination mit blitzlichtartigen Lichtquellen 14 für eine schnelle Bildfolge (typischerweise 50 ms) ausgelegt ist. Die beschriebenen Auswertungen laufen praktisch in Echtzeit, so dass eine hohe Taktrate für die Matchvorgänge realisierbar ist.

Das anhand eines Ventils 12 beschriebene Verfahren lässt sich analog auch für andere eindeutige Strukturmerkmale der Felge 6 oder des Reifens 4 durchführen.

### Bezugszeichenliste

- 2: Matchmaschine
- 4: Reifen
- 6: Felge
- 8: Komplettrad
- 10: Kamera
- 12: Ventil
- 14: Lichtquelle
- 16: Steuerung
- 18: Software
- 20: Auflage
- α: Neigungswinkel
- A: Radachse (= optische Achse)

## Patentansprüche

1. Verfahren zur drehwinkelgenauen Ausrichtung eines Reifens (4) auf einer Felge (6) in einem vormontierten Komplettrad (8), wobei anhand eines von einer Kamera (10) aufgenommen Bildes die Ist-Winkellage eines Matchpunktes des Reifens (4) und/oder eines Matchpunktes der Felge (6) erfasst wird und eine Soll-Winkellage durch Drehen des Reifens (4) und/oder der Felge (6) hergestellt wird,
**dadurch gekennzeichnet, dass** die Erfassung der Ist-Winkellage folgende Schritte umfasst:
• Aufnahme von mindestens drei, vorzugsweise vier Einzelbildern des Komplettrades (8) durch die Kamera (10) mit jeweils unterschiedlichen Beleuchtungsrichtungen;
• Erstellung eines Informationen zur Oberflächenstruktur des Komplettrades (8) enthaltenden Ausgabebildes durch Fusion aus den Einzelbildern;
• softwarebasierte Objektsuche im Ausgabebild nach einem vorgegebenen Strukturmerkmal des Reifens (4) und/oder der Felge (6) und Ermittlung der Objektlage.

2. Verfahren nach Anspruch 1, wobei das Ausgabebild nach dem Prinzip der photometrischen Stereomessung rekonstruiert wird.

3. Verfahren nach Anspruch 2, wobei das Ausgabebild ein Gradientenbild von der Oberfläche des Komplettrades (8) ist.

4. Verfahren nach einem der vorangehenden Ansprüche, wobei das Ausgabebild ein monochromatisches Bild, insbesondere ein Grauwertbild ist.

5. Verfahren nach einem der vorangehenden Ansprüche, wobei jeder der Beleuchtungsrichtungen eine Lichtquelle (14) zugeordnet ist.

6. Verfahren nach Anspruch 5, wobei die Lichtquellen (14) als Blitzlichtquellen ausgebildet sind und die Einzelbilder in schneller Abfolge, vorzugsweise im Bereich von 10 bis einigen 100 Millisekunden, hintereinander aufgenommen werden.

7. Verfahren nach einem der vorangehenden Ansprüche, wobei das Strukturmerkmal ein Ventil (12) oder Ventilloch in/an der Felge (6) ist.

8. Verfahren nach Anspruch 7, wobei die Objektsuche auf einen kreisringförmigen Suchbereich limitiert wird, der einen äußeren Felgenring der Felge (6) repräsentiert.

9. Verfahren nach Anspruch 8, wobei der kreisringförmige Bereich für die Objektsuche nach Art einer Abwicklung in einen rechteckförmigen Bereich transformiert wird.

10. Verfahren nach Anspruch 8 oder 9, wobei das Ventil (12) oder Ventilloch durch seine charakteristische Form und Größe von anderen Strukturen im Suchbereich unterschieden wird.

11. Verfahren nach einem der vorangehenden Ansprüche, wobei die Bildauswertung nicht durch Vergleich mit einem Referenzbild angelernt wird.

12. Vorrichtung zur Durchführung des Verfahrens nach einem der vorangehenden Ansprüche mit einer Auflage (20) zur Aufnahme des Komplettrades (8), mit einer auf die Auflage (20) gerichteten Kamera (10), mit mindestens drei, vorzugsweise vier Lichtquellen (14) zur Beleuchtung der Auflage (20) aus jeweils unterschiedlichen Beleuchtungsrichtungen, mit einer Steuerung (16) für die koordinierte Ansteuerung von Kamera (10) und Lichtquellen (14), und mit einer Auswertungseinheit für die Erstellung des Ausgabebildes und die Objektsuche sowie Lageermittlung.

## Claims

1. A method for aligning a tyre (4) on a rim (6) at a precise angle of rotation in a preassembled complete wheel (8), wherein the actual angular position of a match point of the tyre (4) and/or a match point of the rim (6) is detected based on an image recorded by a camera (10) and a desired angular position is established by rotating the tyre (4) and/or the rim (6),
**characterized in that** the detection of the actual angular position comprises the following steps:
• recording at least three, preferably four individual images of the complete wheel (8) by the camera (10), each with different illumination directions;
• creating an output image containing information on the surface structure of the complete wheel (8) by fusion from the individual images;
• software-based object search in the output image for a predetermined structural feature of the tyre (4) and/or the rim (6) and determination of the object position.

2. The method according to claim 1, wherein the output image is reconstructed according to the principle of photometric stereo measurement.

3. The method according to claim 2, wherein the output image is a gradient image of the surface of the complete wheel (8).

4. The method according to any one of the preceding claims, wherein the output image is a monochromatic image, in particular a grey-scale image.

5. The method according to any one of the preceding claims, wherein a light source (14) is assigned to each of the illumination directions.

6. The method according to claim 5, wherein the light sources (14) are designed as flash light sources and the individual images are recorded one after the other in rapid succession, preferably in the range of 10 to several 100 milliseconds.

7. The method according to any one of the preceding claims, wherein the structural feature is a valve (12) or valve hole in/on the rim (6).

8. The method according to claim 7, wherein the object search is limited to a circular ring-shaped search area representing an outer rim ring of the rim (6).

9. The method according to claim 8, wherein the circular ring-shaped area for the object search is transformed into a rectangular area in the manner of a flat projection.

10. The method according to claim 8 or 9, wherein the valve (12) or valve hole is distinguished from other structures in the search area by its characteristic shape and size.

11. The method according to any one of the preceding claims, wherein the image evaluation is not taught by comparison with a reference image.

12. A device for carrying out the method according to any one of the preceding claims, with a support (20) for receiving the complete wheel (8), with a camera (10) directed at the support (20), with at least three, preferably four, light sources (14) for illuminating the support (20) in each case from different illumination directions, with a controller (16) for the coordinated control of the camera (10) and the light sources (14), and with an evaluation unit for creating the output image and for the object search and position determination.

## Revendications

1. Procédé d'alignement de manière précise au niveau de l'angle de rotation d'un pneu (4) sur une jante (6) dans une roue complète (8) prémontée, sachant qu'à l'aide d'une image prise par une caméra (10), la position angulaire réelle d'un point de concordance du pneu (4) et/ou d'un point de concordance de la jante (6) est saisie et une position angulaire théorique est établie par rotation du pneu (4) et/ou de la jante (6),
**caractérisé en ce que** la saisie de la position angulaire réelle comprend les étapes suivantes :
• prise d'au moins trois, de préférence quatre images individuelles de la roue complète (8) par la caméra (10) avec des directions d'éclairage respectivement différentes ;
• établissement d'une image de sortie contenant des informations relatives à la structure de surface de la roue complète (8) par fusion des images individuelles ;
• détection d'objet à base d'un logiciel dans l'image de sortie selon une caractéristique structurale prédéfinie du pneu (4) et/ou de la jante (6) et détermination de la position d'objet.

2. Procédé selon la revendication 1, sachant que l'image de sortie est reconstituée selon le principe de la mesure stéréoscopique photométrique.

3. Procédé selon la revendication 2, sachant que l'image de sortie est une image à gradients de la surface de la roue complète (8).

4. Procédé selon l'une quelconque des revendications précédentes, sachant que l'image de sortie est une image monochromatique, en particulier une image à niveaux de gris.

5. Procédé selon l'une quelconque des revendications précédentes, sachant qu'une source lumineuse (14) est attribuée à chacune des directions d'éclairage.

6. Procédé selon la revendication 5, sachant que les sources lumineuses (14) sont constituées sous la forme de sources de lumière flash et les images individuelles sont prises les unes derrière les autres en succession rapide, de préférence dans une plage de 10 à 100 millisecondes.

7. Procédé selon l'une quelconque des revendications précédentes, sachant que la caractéristique structurale est une valve (12) ou un trou de valve dans/sur la jante (6) .

8. Procédé selon la revendication 7, sachant que la détection d'objet est limitée sur une zone de détection circulaire qui représente un anneau de jante extérieur de la jante (6).

9. Procédé selon la revendication 8, sachant que la zone circulaire pour la détection d'objet est transformée en une zone rectangulaire à la manière d'un développement.

10. Procédé selon la revendication 8 ou 9, sachant que la valve (12) ou le trou de valve se différencie par sa forme caractéristique et la taille des autres structures dans la zone de détection.

11. Procédé selon l'une quelconque des revendications précédentes, sachant que l'évaluation d'image n'est pas instruite par comparaison avec une image de référence.

12. Dispositif permettant d'effectuer le procédé selon l'une quelconque des revendications précédentes avec une aire de support (20) pour recevoir la roue complète (8), avec une caméra (10) orientée sur l'aire de support (20), avec au moins trois, de préférence quatre sources lumineuses (14) pour éclairer l'aire de support (20) à partir de directions d'éclairage respectivement différentes, avec une commande (16) pour le pilotage coordonné de la caméra (10) et des sources lumineuses (14) et avec une unité d'évaluation pour l'élaboration de l'image de sortie et la détection d'objet ainsi que pour la détermination de position.
